(19) **Europäisches Patentamt**

**European Patent Office**

**Office européen des brevets**

(11) **EP 0 605 312 B1**

(12) **FASCICULE DE BREVET EUROPEEN**

(45) Date de publication et mention
de la délivrance du brevet:
**12.07.2000 Bulletin 2000/28**

(51) Int. Cl.⁷: **H04B 7/26**

(21) Numéro de dépôt: **93403177.4**

(22) Date de dépôt: **27.12.1993**

(54) **Procédé de transmission d'informations à débit élevé par allocation multiple de blocs, procédé de réception associé et dispositif de réception pour sa mise en oeuvre**

Verfahren zur Informationsübertragung mit hoher Rate durch Mehrfachblockzuweisung, Empfangsverfahren und Empfänger dafür

Method of high rate information transmission by multiple block allocation, method and device for reception

(84) Etats contractants désignés:
**AT BE DE DK ES FR GB IT NL SE**

(30) Priorité: **30.12.1992 FR 9215934**

(43) Date de publication de la demande:
**06.07.1994 Bulletin 1994/27**

(73) Titulaire: **ALCATEL**
**75008 Paris (FR)**

(72) Inventeur: **Mourot, Christophe**
**F-92600 Asnieres (FR)**

(74) Mandataire:
**El Manouni, Josiane et al**
**COMPAGNIE FINANCIERE ALCATEL**
**Dépt. Propr. Industrielle,**
**30, avenue Kléber**
**75116 Paris (FR)**

(56) Documents cités:
**EP-A- 0 399 612       WO-A-88/05981**
**WO-A-92/22158        US-A- 5 155 742**

• **IBM TECHNICAL DISCLOSURE BULLETIN vol. 24, no. 11B , Avril 1982 , NEW-YORK,US; pages 5805 - 5808 D.F.BANTZ 'CONTINUATION PACKET PROTOCOL'**

**Description**

La présente invention concerne un procédé de transmission d'informations à débit élevé par allocation multiple de blocs. Elle vise également un procédé de réception associé et un dispositif de réception pour sa mise en oeuvre.

Dans un système à accès multiple à répartition dans le temps (AMRT), chaque usager utilise une fréquence donnée pendant un intervalle de temps donné, les autres intervalles de temps étant réservés à d'autres utilisateurs. la structure du signal est fondée sur la notion de bloc, correspondant au terme anglo-saxon de "burst". Un bloc contient des symboles de début et de fin qui sont connus du récepteur, des symboles d'information qui constituent la charge utile d'un bloc, et une séquence d'apprentissage connue à priori du récepteur et utilisée à des fins de synchronisation, d'estimation de canal et d'égalisation.

L'efficacité utile d'un bloc est définie par le rapport:

$$eu = \frac{\text{charge utile}}{\text{début} + \text{charge utile} + \text{séquence} + \text{fin}}$$

L'efficacité utile eu augmente avec la charge utile. Un certain nombre Nb de blocs précités est inséré dans une entité supérieure appelée trame qui est répétée périodiquement. Le débit utile pour un utilisateur disposant d'un bloc par trame est:

$$Du = \frac{ncu}{dt}$$

où

ncu est le nombre de symboles d'information transmis par cet utilisateur, c'est à dire la charge utile de son bloc,

dt est la durée d'une trame.

En communication radio, le comportement du canal de transmission varie dans le temps. Pour pouvoir détecter un bloc reçu et décider de la valeur des symboles d'information, le récepteur doit connaître le comportement du canal de transmission pendant la durée de transmission du bloc. Pour cela, un dispositif d'estimation utilise la séquence d'apprentissage placée au milieu du bloc. Les caractéristiques de cette séquence d'apprentissage sont choisies en fonction des caractéristiques du canal de transmission. On comprend que plus le bloc s'étend de chaque côté de la séquence d'apprentissage, c'est à dire plus la longueur de la charge utile est grande devant celle de la séquence d'apprentissage, moins la réponse impulsionnelle du canal estimée au centre du bloc sera valable aux deux extrémités du bloc. La séquence d'apprentissage est généralement placée au milieu du bloc et la charge utile, dont la taille est dimensionnée en fonction de celle de la séquence, est équirépartie de chaque côté afin de minimiser les fluctuations du canal, donc les variations de sa réponse impulsionnelle, sur la durée du bloc.

S'il est nécessaire pour un usager de transmettre un débit supérieur au débit utile correspondant à un bloc, une solution consiste à lui allouer plusieurs blocs, non nécessairement adjacents, dans une même trame. Si on lui alloue n blocs, cet usager bénéficie alors d'un débit utile égal à:

$$\frac{n.\,ncu}{dt}$$

En revanche, l'efficacité utile de la transmission reste égale à eu.

Le but de la présente invention est de proposer un procédé de transmission d'informations à débit élevé par allocation multiple de blocs qui contribue également à une amélioration de l'efficacité utile de la transmission.

Le document IBM Technical Disclosure Bulletin vol. 24, N° 11B, avril 1982 New York, US, pages 5805-5808 décrit un procédé de transmission d'informations dans lequel des symboles système entre les symboles de début du premier et la fin du dernier de bloques adjacents d'une trames sont supprimés et remplacés par des symboles d'information dans le super-bloc ainsi constitué.

Toutefois, l'efficacité utile du procédé connu de transmission n'est pas optimisée.

Par conséquent, un but de l'invention est d'optimiser l'efficacité utile du procédé de transmission.

Ce but est atteint au moyen du procédé de transmission présentant les caractéristiques de la revendication 1.

On améliore bien l'efficacité utile de transmission.

Avantageusement, lorsque les blocs adjacents comprennent des symboles de système connus d'un récepteur parmi lesquels figurent des symboles de début, des symboles de fin et une séquence d'apprentissage et comprennent aussi des symboles d'information, les séquences d'apprentissage respectives et les symboles d'information respectifs de ces blocs adjacents sont réarrangés de sorte que le super-bloc comprenne une séquence d'apprentissage unique.

Ainsi, on obtient des super-blocs au sein desquels sont réarrangés les symboles d'apprentissage et d'information. L'efficacité utile est alors considérablement augmentée. En effet, la séquence d'apprentissage d'un super-bloc peut être la même que celle d'un bloc normal si le comportement du canal le permet, ou plus longue si c'est nécessaire. Cependant, si cette séquence d'apprentissage devait avoir une longueur supérieure à la somme des longueurs des séquences d'apprentissage des blocs normaux concaténés dans le super-bloc, alors le procédé selon l'invention ne pourrait pas dans ce cas procurer le gain attendu en efficacité utile.

Selon un autre aspect de l'invention, un procédé de réception d'informations transmises à débit élevé par allocation multiple de blocs au sein d'une trame de transmission, associé au procédé de transmission précédent, comprend une étape de reconnaissance de la réception d'un super-bloc, et comprend en outre, en cas de reconnaissance d'un super-bloc, une étape pour traiter ce super-bloc et en extraire les symboles d'information.

Selon encore un autre aspect de l'invention, un dispositif de réception d'informations transmises à débit élevé par allocation multiple de blocs au sein d'une trame de transmission, mettant en oeuvre le procédé de réception précédent, comprend des moyens pour reconnaître la réception d'un ou plusieurs super-blocs générés par mise en oeuvre du procédé de transmission précédent et des moyens pour traiter les super-blocs reçus et en extraire les symboles d'information contenus dans les blocs initiaux concaténés.

Selon encore un autre aspect de l'invention, un dispositif d'émission d'informations transmises à débit élevé par allocation multiple de blocs au sein d'une trame de transmission comprend des moyens pour mettre en oeuvre le procédé de transmission prévu ci-dessus.

D'autres particularités et avantages de l'invention apparaîtront encore dans la description ci-après.

Aux dessins annexés donnés à titre d'exemples non limitatifs:

- la figure 1 représente la structure de deux blocs adjacents au sein d'une trame et la structure d'un super-bloc obtenu avec le procédé selon l'invention;
- la figure 2 représente trois modes particuliers de transmission d'informations relatives à l'émission de super-blocs; et
- la figure 3 illustre une forme particulière de mise en oeuvre du procédé selon l'invention avec allocation de quatre blocs adjacents à un même usager au sein d'une trame.

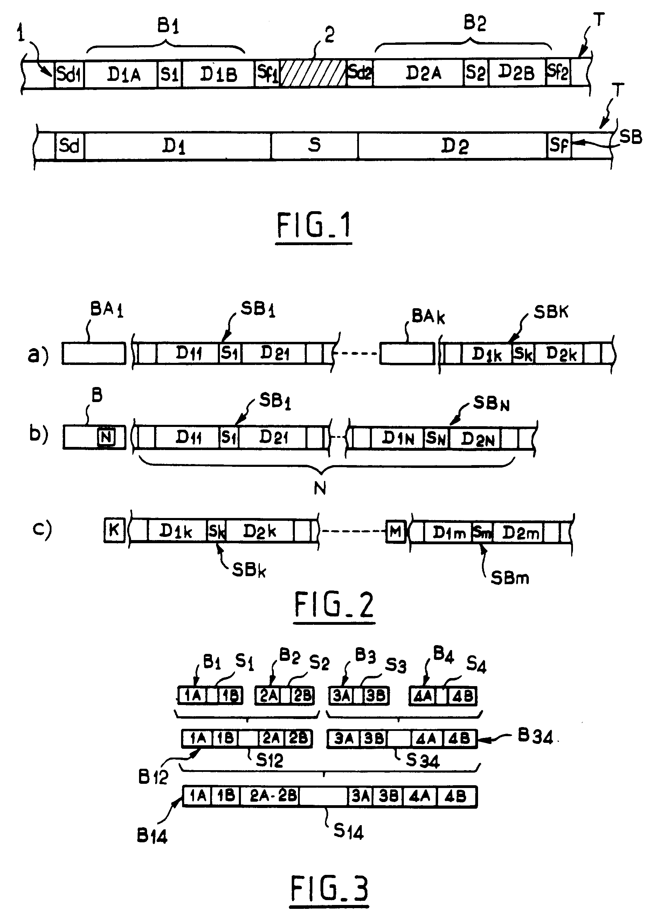

On va maintenant décrire un exemple de mise en oeuvre du procédé selon l'invention, en référence à la figure 1 qui représente une configuration classique 1 de deux blocs adjacents B1, B2 au sein d'une trame T dont les autres blocs ne sont pas représentés, et, dans une illustration du même type, une configuration d'un super-bloc SB obtenu avec le procédé selon l'invention. Chaque bloc initial B1, B2 contient des symboles de début Sd1, Sd2 et de fin Sf1, Sf2 connus du récepteur, une "charge utile" constituée de symboles d'information et divisée en deux parties D1A, D1B; D2A, D2B entre lesquelles est insérée une séquence d'apprentissage S1; S2 dimensionnée en fonction du comportement attendu du canal de transmission. A ce titre, on effectue d'abord des études de comportement du canal afin de pouvoir soit choisir une séquence existante, soit en fabriquer une nouvelle, permettant ainsi de mener à bien l'estimation du canal de transmission. Des symboles de garde 2, utilisés à des fins de synchronisation et aussi pour éviter tout recouvrement entre deux blocs consécutifs, particulièrement s'ils sont destinés à deux récepteurs différents, sont généralement prévus entre les deux blocs adjacents B1, B2. Le super-bloc SB contient également des symboles de début et de fin Sd, Sf, une charge utile divisée en deux parties D1, D2 entre lesquelles est placée la séquence d'apprentissage unique S.

L'avertissement du récepteur de l'imminence d'une transmission de super-blocs peut être effectué de plusieurs façons possibles par la station d'émission, en référence à la figure 2. Dans une première option a), un bloc d'avertissement BA1, BAk, contenant des informations représentatives de la configuration d'un super-bloc, est transmis avant chaque trame contenant au moins un super-bloc SB1, SBk constitué d'une charge utile D11, D21; D1k, D2k et d'une séquence d'apprentissage unique S1, Sk. Ces informations représentatives incluent le nombre de blocs adjacents concaténés dans le super-bloc concerné, la position de la séquence d'apprentissage au sein du super-bloc et la taille (longueur) de cette séquence d'apprentissage. On peut également transmettre les caractéristiques de la séquence d'apprentissage. Ainsi, une séquence d'apprentissage est généralement constituée de L symboles de garde suivis de P symboles de référence, suivis de L symboles de garde, L étant égal à la longueur de la réponse impulsionnelle du canal en nombre de durées symboles, et P devant être supérieur ou égal à L+1. Suivant les valeurs de P et de L, on peut donc estimer un canal plus ou moins long. Il est donc avantageux de transmettre au sein des informations représentatives de la configuration d'un super-bloc, les valeurs de P et de L, ou alors un numéro de référence donnant automatiquement ces valeurs.

Dans une seconde option b), un seul bloc d'avertissement B est transmis en tête d'un train de N trames contenant chacune un super-bloc SB1, SBN et ce bloc d'avertissement contient, outre les informations de configuration précitées, le nombre N de trames contenant des super-blocs. Cette option est bien sûr envisageable lorsque les super-blocs transmis ont la même configuration.

Dans une troisième option c), si des configurations caractéristiques de super-blocs sont répertoriées et connues des équipements récepteurs, on peut alors considérablement réduire le volume d'informations d'avertissement à transmettre en ne transmettant plus de blocs préalables, mais en ne transmettant qu'une simple information de signalisation K, M avant chaque super-bloc SBk, SBm. L'équipement récepteur est alors prévu pour interpréter cette signalisation et préparer selon la configuration associée à cette signalisation la réception des super-blocs.

Le procédé selon l'invention peut être appliqué à un nombre de blocs adjacents supérieur à 2. Ainsi, en référence à la figure 3, on peut envisager la concaténation de quatre blocs adjacents B1, B2, B3, B4, dotés chacun d'une charge utile 1A, 1B; 2A, 2B; 3A, 3B; 4A, 4B, et d'une séquence d'apprentissage S1, S2, S3, S4. Dans une première étape de concaténation, on obtient deux super-blocs B12, B34 issus respectivement de la concaténation des blocs B1, B2 et des blocs B3, B4, chaque super-bloc comportant une séquence d'apprentissage S12, S34. Dans une seconde étape de concaténation, les deux super-blocs sont concaténés pour générer un super-bloc B14 comportant une séquence d'apprentissage unique S14 et une charge utile constituée des symboles d'information 1A, 1B; 2A, 2B; 3A, 3B; 4A, 4B issus des blocs initiaux B1, B2, B3, B4. L'efficacité utile de la transmission de tels super-blocs est considérablement augmentée par rapport à celle de la transmission de blocs isolés, si toutefois la longueur de la séquence d'apprentissage unique reste inférieure à quatre fois la longueur de la séquence d'apprentissage d'un bloc initial. Ceci dépend du comportement dans le temps du canal de transmission.

Le procédé de réception associé au procédé de transmission selon l'invention comprend une étape de reconnaissance de la réception prochaine d'un ou plusieurs super-blocs et une étape de traitement de ce ou ces super-blocs. L'étape de reconnaissance comprend la réception d'informations représentatives de la configuration d'un super-bloc, notamment le nombre de blocs concaténés dans un super-bloc, l'emplacement de la séquence d'apprentissage unique au sein du super-bloc et la taille de la séquence d'apprentissage. En général, une séquence d'apprentissage comprend des symboles de garde en nombre L suivis de symboles de référence en nombre P suivis eux-mêmes de symboles de garde en nombre L. Si le procédé de transmission selon l'invention prévoit la transmission des valeurs P et L, alors l'étape de reconnaissance du procédé de réception associé comprend en outre la réception des valeurs P et L. En outre, si le procédé de transmission selon l'invention prévoit la transmission d'un numéro de référence fournissant ces valeurs P et L, alors le procédé de transmission doit inclure dans son étape de reconnaissance la réception dudit numéro de référence et son traitement pour en déduire lesdites valeurs P et L.

Plusieurs modes de réception peuvent être envisagés pour prendre en compte les différentes options de transmission précitées. Ainsi, l'étape de reconnaissance peut comprendre, en référence à la figure 2 (a), avant chaque réception d'un super-bloc SB1, SBk la réception d'un bloc spécifique BA1, BAk contenant lesdites informations représentatives de la configuration dudit super-bloc SB1, SBk. L'étape de reconnaissance peut également comprendre la réception d'une information représentative du nombre N de trames dans lesquelles des super-blocs SB1, SBN sont utilisés, en référence à la figure 2 (b). On peut aussi prévoir la réception préalable d'un numéro de configuration K, M, sous la forme d'une information de signalisation, associé à une configuration prédéterminée de super-blocs SBk, SBm qui doivent être reçus, en référence à la figure 2 (c).

Le procédé de réception selon l'invention est mis en oeuvre dans un dispositif de réception comprenant, outre des moyens classiques pour recevoir et traiter des trames de transmission, des moyens pour reconnaître la réception de super-blocs et des moyens pour traiter ces super-blocs et en extraire les symboles d'information contenus dans les blocs initiaux concaténés.

En fait, on considère que l'ensemble des symboles de début, des symboles de la séquence d'apprentissage, des symboles de fin et des symboles de garde constituent des symboles de système. Les symboles de système identifient ainsi tous les symboles qui ne sont pas des symboles d'information.

En résumé, l'invention propose des moyens pour remplacer certains symboles de système (au moins un) compris entre les symboles de début Sd1 d'un premier bloc B1 et les symboles de fin Sf2 du dernier bloc B2 d'un ensemble de blocs adjacents par des symboles d'information en vue de la constitution d'un super-bloc. On remarquera que le remplacement des deux séquences d'apprentissage S1, S2 des blocs B1, B2 par une séquence d'apprentissage unique S, opération décrite plus haut, rentre bien dans ce cadre car, cette opération ne présente un réel intérêt que si cette séquence unique S présente une longueur inférieure à la somme des longueurs des deux séquences initiales S1, S2. Tout se passe donc comme si l'on remplaçait certains symboles de l'une et/ou de l'autre des séquences d'apprentissage initiales S1, S2 par des symboles d'information.

Bien sûr la présente invention n'est pas limitée aux exemples qui viennent d'être décrits et de nombreux aménagements peuvent être apportés à ces exemples sans sortir du cadre de l'invention. Ainsi, le nombre de blocs concaténés n'est pas limité à celui donné dans les exemples décrits.

## Revendications

1. Procédé de transmission d'informations à débit élevé par allocation multiple de blocs au sein d'une trame de transmission, ladite trame comprenant des symboles d'information (D1A, D1B; D2A, D2B) et des symboles de système (Sd1, S1, Sf1, 2, Sd2, S2, Sf2), dans lequel on alloue à un usager plusieurs blocs adjacents (B1, B2) et on remplace au moins un desdits symboles de système (S1, Sf1, 2, Sd2, S2) compris entre les symboles d'information du premier (D1A) et du dernier (D2B) desdits blocs adjacents (B1, B2) par un symbole d'information pour former un super-bloc (SB), caractérisé en ce que, lorsque chacun desdits blocs adjacents (B1, B2) comprend des symboles de système connus d'un récepteur parmi lesquels figurent des symboles de début (Sd1, Sd2), des symboles de fin (Sf1, Sf2) et une séquence d'apprentissage (S1, S2) et comprend aussi des symboles d'information (D1A, D1B; D2A, D2B), les séquences d'apprentissage respectives (S1, S2) et les symboles d'information respectifs (D1A, D1B; D2A, D2B) desdits blocs adjacents (B1, B2) sont réarrangés de sorte que ledit super-bloc (SB) comprenne une séquence d'apprentissage unique (S).

2. Procédé selon la revendication 1, caractérisé en ce qu'il comprend en outre une étape pour avertir le récepteur de la transmission imminente de super-blocs, comportant la transmission d'une information représentative du nombre de blocs concaténés dans lesdits super-blocs.

3. Procédé selon la revendication 1 ou 2, caractérisé en ce qu'il comprend en outre une étape pour avertir le récepteur de la transmission imminente de super-blocs, comportant la transmission d'au moins une information représentative de la configuration d'un super-bloc parmi le nombre de blocs concaténés dans un super-bloc, l'emplacement de la séquence d'apprentissage unique au sein du super-bloc et la taille de ladite séquence d'apprentissage unique.

4. Procédé selon la revendication 3, ladite séquence d'apprentissage unique comprenant des symboles de garde en nombre L suivis de symboles de référence en nombre P suivis eux-mêmes de symboles de garde en nombre L, caractérisé en ce que lesdites informations représentatives comprennent en outre les valeurs P et L.

5. Procédé selon la revendication 3, ladite séquence d'apprentissage unique comprenant des symboles de garde en nombre L suivis de symboles de référence en nombre P suivis eux-mêmes de symboles de garde en nombre L, caractérisé en ce que lesdites informations représentatives comprennent en outre un numéro de référence fournissant les valeurs P et L.

6. Procédé selon l'une quelconque des revendications 2 à 5, caractérisé en ce qu'une étape d'avertissement est effectuée avant la transmission d'un super-bloc (SB1, SBk) et en ce que ladite étape d'avertissement comprend la transmission d'un bloc spécifique (BA1, BAk) contenant lesdites informations représentatives de la configuration dudit super-bloc (SB1, SBk).

7. Procédé selon l'une quelconque des revendications 2 à 5, caractérisé en ce que les informations transmises au cours de l'étape d'avertissement comportent en outre une information représentative du nombre (N) de trames dans lesquelles des super-blocs (SB1, SBN) sont utilisés.

8. Procédé selon l'une quelconque des revendications 2 à 5, caractérisé en ce qu'à chaque configuration de super-bloc (SBk, SBm) connue à l'avance est associé un numéro de configuration, et en ce que l'étape d'avertissement consiste en la transmission du numéro de configuration (K, M) correspondant à la configuration des super-blocs qui doivent être transmis.

9. Procédé selon l'une quelconque des revendications précédentes, caractérisé en ce que le nombre de blocs adjacents alloués à un même usager au sein d'une trame de transmission est égal à deux.

10. Procédé de réception d'informations transmises à débit élevé par allocation multiple de blocs au sein d'une trame de transmission, associé au procédé de transmission selon l'une quelconque des revendications 1 ou 2, caractérisé en ce qu'il comprend une étape de reconnaissance de la réception d'un super-bloc, et en ce qu'il comprend en outre, en cas de reconnaissance d'un super-bloc, une étape pour traiter ce super-bloc et en extraire lesdits symboles d'information.

11. Procédé de réception d'informations transmises à débit élevé par allocation multiple de blocs au sein d'une trame de transmission, chaque bloc (B1, B2) comprenant initialement des symboles d'information (D1A, D1B; D2A, D2B) et une séquence d'apprentissage (S1, S2), associé au procédé de transmission selon l'une quelconque des revendications 1 à 9, caractérisé en ce qu'il comprend une étape de reconnaissance de la réception d'un super-bloc, ledit super-bloc ayant été préalablement obtenu par réarrangement des séquences d'apprentissages respectives et des symboles d'informations respectifs de plusieurs blocs adjacents alloués à un même usager et comprenant une séquence d'apprentissage unique, et en ce qu'il comprend en outre, en cas de reconnaissance d'un super-bloc, une étape pour traiter ce super-bloc et en extraire lesdits symboles d'information.

12. Procédé selon la revendication 11, caractérisé en ce que l'étape de reconnaissance comprend la réception d'informations représentatives de la configuration d'un super-bloc, notamment le nombre de blocs concaténés dans un super-bloc, l'emplacement de la séquence d'apprentissage unique au sein du super-bloc et la taille de ladite séquence d'apprentissage.

13. Procédé selon la revendication 12, ladite séquence d'apprentissage unique comprenant des symboles de garde en nombre L suivis de symboles de référence en nombre P suivis eux-mêmes de symboles de garde en nombre L, caractérisé en ce que l'étape de reconnaissance comprend en outre la réception des valeurs P et L.

14. Procédé selon la revendication 12, ladite séquence d'apprentissage unique comprenant des symboles de garde en nombre L suivis de symboles de référence en nombre P suivis eux-mêmes de symboles de garde en nombre L, caractérisé en ce que l'étape de reconnaissance comprend en outre la réception d'un numéro de référence fournissant les valeurs L et P.

15. Procédé selon l'une quelconque des revendications 12 à 14, caractérisé en ce que l'étape de reconnaissance comprend avant chaque réception d'un super-bloc (SB1, SBk) la réception d'un bloc spécifique (BA1, BAk) contenant lesdites informations représentatives de la configuration dudit super-bloc (SB1, SBk).

16. Procédé selon l'une quelconque des revendications 12, à 15, caractérisé en ce que l'étape de reconnaissance comprend en outre la réception et la reconnaissance d'une information représentative du nombre (N) de trames dans lesquelles des super-blocs (SB1, SBN) sont utilisés.

17. Procédé selon l'une quelconque des revendications 12 à 14, caractérisé en ce que l'étape de reconnaissance comprend en outre la réception préalable et la reconnaissance d'un numéro de configuration associé à une configuration prédéterminée de super-blocs qui doivent être reçus.

18. Dispositif de réception d'informations transmises à débit élevé par allocation multiple de blocs au sein d'une trame de transmission, mettant en oeuvre le procédé de réception selon l'une quelconque des revendications 10 à 17, caractérisé en ce qu'il comprend des moyens pour reconnaître la réception d'un ou plusieurs super-blocs générés par mise en oeuvre du procédé de transmission selon l'une quelconque des revendications 1 à 9, et des moyens pour traiter lesdits super-blocs reçus et en extraire les symboles d'information contenus dans les blocs initiaux concaténés (B1, B2).

19. Dispositif d'émission d'informations transmises à débit élevé par allocation multiple de blocs au sein d'une trame de transmission, caractérisé en ce qu'il comprend des moyens pour mettre en oeuvre le procédé de transmission selon l'une quelconque des revendications 1 à 9.

**Claims**

1. Method of transmitting information at high speed by allocation of multiple bursts within a transmission frame including information symbols (D1A, D1B; D2A, D2B) and system symbols (Sd1, S1, Sf1, 2, Sd2, S2, Sf2) characterized in that a user is allocated a plurality of adjacent bursts (B1, B2) and in that at least one of said system symbols (S1, Sf1, 2, Sd2, S2) between the information symbols (D1A) of the first of said adjacent bursts (B1, B2) and the information symbols (D2B) of the last of said adjacent bursts (B1, B2) is replaced with an information symbol to form a superburst (SB).

2. Method according to claim 1 characterized in that it further includes a stage for advising the receiver of the imminent transmission of superbursts including the transmission of information representing the number of bursts concatenated in said superbursts.

3. Method according to claim 1 characterized in that each adjacent burst (B1, B2) includes information symbols (D1A, D1B; D2A, D2B) and system symbols known to a receiver including start symbols (Sd1, Sd2), end symbols (Sf1, Sf2) and a learning sequence (S1, S2), and in that the respective learning sequences (S1, S2) and the respective information symbols (D1A, D1B; D2A, D2B) of said adjacent bursts (B1, B2) are rearranged so that said superburst (SB) includes a single learning sequence (S).

4. Method according to claim 3 characterized in that it further includes a stage for advising the receiver of the imminent transmission of superbursts including the transmission of at least one indication representing the configuration of a superburst including the number of bursts concatenated in a superburst, the location of the single learning sequence within the superburst and the length of said single learning sequence.

5. Method according to claim 4 wherein said single learning sequence includes L guard symbols followed by P reference symbols followed by L guard symbols characterized in that said indication further includes the values P and L.

**6.** Method according to claim 4 wherein said single learning sequence includes L guard symbols followed by P reference symbols followed by L guard symbols characterized in that said indication further includes a reference number giving the values P and L.

**7.** Method according to any one of claims 2 and 4 through 6 characterized in that a warning stage is executed prior to transmission of a superburst (SB1, SBk) and in that said warning stage includes the transmission of a specific burst (BA1, BAk) containing said information representing the configuration of said superburst (SB1, SBk).

**8.** Method according to any one of claims 2 and 4 through 6 characterized in that the information transmitted during the warning stage further includes an indication of the number (N) of frames in which superbursts (SB1, SBN) are used.

**9.** Method according to any one of claims 2 and 4 through 6 characterized in that each superburst configuration (SBk, SBm) known in advance is associated with a configuration number and in that the warning stage consists in transmitting the configuration number (K, M) corresponding to the configuration of superbursts to be transmitted.

**10.** Method according to any one of the preceding claims characterized in that the number of adjacent bursts allocated to the same user within a transmission frame is equal to two.

**11.** Method of receiving information transmitted at high speed by allocation of multiple bursts within a transmission frame associated with the transmission method according to claim 1 or claim 2 characterized in that it includes a stage for recognizing reception of a superburst and in that it further includes, in the event that a superburst is recognized, a stage for processing said superbursts and extracting said information symbols therefrom.

**12.** Method of receiving information transmitted at high speed by allocation of multiple bursts within a transmission frame, each burst (B1, B2) initially including information symbols (D1A, D1B; D2A, D2B) and a learning sequence (S1, S2), associated with the transmission method according to any one of claims 3 through 10, characterized in that it includes a stage for recognizing reception of a superburst previously obtained by rearranging the respective learning sequences and the respective information symbols of a plurality of adjacent bursts allocated to the same user and including a single learning sequence and in that it further includes, in the event that a superburst is recognized, a stage for processing said superburst and extracting said information symbols therefrom.

**13.** Method according to claim 12 characterized in that the recognition stage includes the reception of information representing the configuration of a superburst, including the number of bursts concatenated in a superburst, the location of the single learning sequence within the superburst and the length of said learning sequence.

**14.** Method according to claim 13 wherein said single learning sequence includes L guard symbols followed by P reference symbols followed by L guard symbols characterized in that the recognition stage further includes reception of the values P and L.

**15.** Method according to claim 13 wherein said single learning sequence includes L guard symbols followed by P reference symbols followed by L guard symbols characterized in that the recognition stage further includes reception of a reference number giving the values L and P.

**16.** Method according to any one of claims 13 through 15 characterized in that the recognition stage includes before each superburst (SB1, SBk) is received the reception of a specific burst (BA1, BAk) containing said information representing the configuration of said superburst (SB1, SBk).

**17.** Method according to any one of claims 13 through 16 characterized in that the recognition stage further includes reception and recognition of information representing the number (N) of frames in which superbursts (SB1, SBN) are used.

**18.** Method according to any one of claims 13 through 15 characterized in that the recognition stage further includes prior reception and recognition of a configuration number associated with a predetermined configuration of superbursts to be received.

**19.** Device for receiving information transmitted at high speed by allocation of multiple bursts within a transmission frame using the receiving method according to any one of claims 11 through 18 characterized in that it includes means for recognizing reception of one or more superbursts generated by implementation of the transmission method according to any one of claims 1 through 10 and means for processing said superbursts received and extracting therefrom the information symbols contained in the original bursts (B1, B2) concatenated.

## Patentansprüche

1. Verfahren zur Übertragung von Informationen mit hoher Rate durch Mehrfachblockzuweisung in einem Übertragungsrahmen, wobei der Rahmen Informationssymbole (D1A, D1B; D2A, D2B) und Systemsymbole (Sd1, S1 Sf1, 2 Sd2, S2, Sf2) umfasst, in welchem einem Nutzer mehrere benachbarte Blöcke (B1, B2) zugeteilt werden und wenigstens eines der Systemsymbole (S1, Sf1, 2, Sd2, S2) zwischen den Informationssymbolen des ersten (D1A) und des letzten (D2B) der benachbarten Blöcke (B1, B2) durch ein Informationssymbol ersetzt wird, um einen Super-Block (SB) zu bilden, dadurch gekennzeichnet, dass, wenn jeder der benachbarten Blöcke (B1, B2) einem Empfänger bekannte Systemsymbole umfasst, unter welchen Anfangssymbole (Sd1, Sd2), Endsymbole (Sf1, Sf2) und eine Übungsfolge (S1, S2) vorkommen, und auch Informationssymbole (D1A, D1B; D2A, D2B) umfasst, die jeweiligen Übungsfolgen (S1, S2) und die jeweiligen Informationssymbole (D1A, D1B; D2A, D2B) der benachbarten Blöcke (B1, B2) umgruppiert werden, so dass der Super-Block (SB) eine einzige Übungsfolge (S) umfasst.

2. Verfahren nach Anspruch 1, dadurch gekennzeichnet, dass es außerdem einen Schritt zum Benachrichtigen des Empfängers über die nahe bevorstehende Übertragung von Super-Blöcken, der die Übertragung einer Information umfasst, die für die Anzahl von in den Super-Blöcken verketteten Blöcken charakteristisch ist.

3. Verfahren nach Anspruch 1 oder 2, dadurch gekennzeichnet, dass es außerdem einen Schritt zum Benachrichtigen des Empfängers über die nahe bevorstehende Übertragung von Super-Blök-ken umfasst, der die Übertragung von wenigstens einer Information unter der Anzahl von in einem Super-Block verketteten Blöcken, dem Ort der einzigen Übungsfolge im Super-Block und der Größe der einzigen Übungsfolge umfasst, die für die Konfiguration eines Super-Blocks charakteristisch ist.

4. Verfahren nach Anspruch 3, wobei die einzige Übungsfolge Sperrsymbole mit der Anzahl L, gefolgt von Bezugssymbolen mit der Anzahl P, wiederum gefolgt von Sperrsymbolen mit der Anzahl L umfasst, dadurch gekennzeichnet, dass die charakteristischen Informationen außerdem die Werte P und L umfassen.

5. Verfahren nach Anspruch 3, wobei die einzige Übungsfolge Sperrsymbole mit der Anzahl L, gefolgt von Bezugssymbolen mit der Anzahl P, wiederum gefolgt von Sperrsymbolen mit der Anzahl L umfasst, dadurch gekennzeichnet, dass die charak-teristischen Informationen außerdem eine Bezugs-zahl umfassen, die die Werte P und L liefert.

6. Verfahren nach einem der Ansprüche 2 bis 5, dadurch gekennzeichnet, dass vor der Übertragung eins Super-Blocks (SB1, SBk) ein Benachrichtigungsschritt ausgeführt wird und dass der Benachrichtigungsschritt die Übertragung eines speziellen Blocks (BA1, BAk) umfasst, der die für die Konfiguration des Super-Blocks (SB1, SBk) charakteristischen Informationen enthält.

7. Verfahren nach einem der Ansprüche 2 bis 5, dadurch gekennzeichnet, dass die während des Benachrichtigungsschritts übertragenen Informationen außerdem eine für die Anzahl (N) von Rahmen, in welchen Super-Blöcke (SB1, SBN) verwendet werden, charakteristische Information umfassen.

8. Verfahren nach einem der Ansprüche 2 bis 5, dadurch gekennzeichnet, dass zu jeder vorher bekannten Konfiguration von Super-Blöcken (SBk, SBm) eine Konfigurationsnummer gehört und dass der Benachrichtigungsschritt in der Übertragung der Konfigurationsnummer (K, M) besteht, die der Konfiguration der Super-Blöcke entspricht, die übertragen werden sollen.

9. Verfahren nach einem der vorhergehenden Ansprüche, dadurch gekennzeichnet, dass die Anzahl von demselben Nutzer zugeteilten, benachbarten Blök-ken in einem Übertragungsrahmen zwei beträgt.

10. Verfahren zum Empfang von Informationen, die mit hoher Rate durch Mehrfachblockzuweisung in einem Übertragungarahmen übertragen werden, das zum Übertragungsverfahren nach einem der Ansprüche 1 oder 2 gehört, dadurch gekennzeichnet, dass es einen Erkennungsschritt für den Empfang eines Super-Blocks umfasst und dass es außerdem im Fall der Erkennung eines Super-Blocks einen Schritt zum Verarbeiten dieses Super-Blocks und Extrahieren der Informationssymbole umfasst.

11. Verfahren zum Empfang von Informationen, die mit hoher Rate durch Mehrfachblockzuweisung in einem Übertragungsrahmen übertragen werden, wobei jeder Block (B1, B2) anfänglich Informationssymbole (D1A, D1B; D2A, D2B) und eine Übungsfolge (S1, S2) umfasst, das zum Übertragungsverfahren nach einem der Ansprüche 1 bis 9 gehört, dadurch gekennzeichnet, dass es einen Erkennungsschritt für den Empfang eines Super-Blocks umfasst, wobei der Super-Block vorher durch Umgruppierung der jeweiligen Übungsfolgen und der jeweiligen Informationssymbole mehrerer demselben Nutzer zugeteilter, benachbarter Blöcke erhalten worden war und eine einzige Übungsfolge umfasst, und dass es außerdem im Falle des Erkennens eines Super-Blocks einen Schritt zum Verarbeiten dieses Super-Blocks und Extrahieren der Informationssymbole umfasst.

12. Verfahren nach Anspruch 11, dadurch gekennzeichnet, dass der Erkennungsschritt den Empfang von für die Konfiguration eines Super-Blocks charakteristischen Informationen, insbesondere die Anzahl von zu einem Super-Block verketteten Blöcken, den Ort der einzigen Übungsfolge im Super-Block und die Größe der Übungsfolge, umfasst.

13. Verfahren nach Anspruch 12, wobei die einzige Übungsfolge Sperrsymbole mit der Anzahl L, gefolgt von Bezugssymbolen mit der Anzahl P, wiederum gefolgt von Sperrsymbolen mit der Anzahl L umfasst, dadurch gekennzeichnet, dass der Erkennungsschritt außerdem den Empfang der Werte P und L umfasst.

14. Verfahren nach Anspruch 12, wobei die einzige Übungsfolge Sperrsymbole mit der Anzahl L, gefolgt von Bezugssymbolen mit der Anzahl P, wiederum gefolgt von Sperrsymbolen mit der Anzahl L umfasst, dadurch gekennzeichnet, dass der Erkennungsschritt außerdem den Empfang einer Bezugszahl umfasst, die die Werte L und P liefert.

15. Verfahren nach einem der Ansprüche 12 bis 14, dadurch gekennzeichnet, dass der Erkennungsschritt vor jedem Empfang eines Super-Blocks (SB1, SBk) den Empfang eines speziellen Blocks (BA1, BAk) umfasst, der die für die Konfiguration des Super-Blocks (SB1, SBk) charakteristische Informationen enthält.

16. Verfahren nach einem der Ansprüche 12 bis 15, dadurch gekennzeichnet, dass der Erkennungsschritt außerdem den Empfang und die Erkennung einer für die Anzahl (N) von Rahmen, in welchen Super-Blöcke (SB1, SBN) verwendet werden, charakteristischen Information umfasst.

17. Verfahren nach einem der Ansprüche 12 bis 14, dadurch gekennzeichnet, dass der Erkennungsschritt außerdem den vorherigen Empfang und die Erkennung einer Konfigurationsnummer umfasst, die zu einer vorbestimmten Konfiguration von Super-Blöcken gehört, die empfangen werden sollen.

18. Vorrichtung zum Empfang von Informationen, die mit hoher Rate durch Mehrfachblockzuweisung in einem Übertragungsrahmen übertragen werden, die das Empfangsverfahren nach einem der Ansprüche 10 bis 17 durchführt, dadurch gekennzeichnet, dass sie Mittel zum Erkennen des Empfangs eines oder mehrerer Super-Blöcke, die durch Durchführung des Übertragungsverfahrens nach einem der Ansprüche 1 bis 9 erzeugt wurden, und Mittel zum Verarbeiten der empfangenen Super-Blöcke und Extrahieren der in den verketteten anfänglichen Blöcken (B1, B2) enthaltenen Informationssymbole umfasst.

19. Vorrichtung zum Senden von mit hoher Rate durch Mehrfachblockzuweisung in einem Übertragungsrahmen übertragenen Informationen, dadurch gekennzeichnet, dass sie Mittel zur Durchführung des Übertragungsverfahrens nach einem der Ansprüche 1 bis 9 umfasst.

FIG.1

FIG.2

FIG.3